# EUROPÄISCHE PATENTSCHRIFT

(11) **EP 2 176 068 B1**
(45) Veröffentlichungstag und Bekanntmachung des Hinweises auf die Patenterteilung: **14.11.2012**
(21) Anmeldenummer: 08774875.2
(22) Anmeldetag: 08.07.2008
(51) Int. Cl.: B32B 37/14

(54) **Verfahren und Vorrichtung zur Herstellung einer Leichtbauplatte**
Method and apparatus for fabrication of a light weight building panel
Procédé et dispositif pour la fabrication d'un panneau de construction léger

(30) Priorität: 20.07.2007 DE 102007034543
(43) Veröffentlichungstag der Anmeldung: 21.04.2010
(73) Patentinhaber: Fritz Egger GmbH & Co. OG, 3105 Unterradlberg (AT)
(72) Erfinder: RIEPERTINGER, Manfred, 83093 Bad Endorf (DE); WEISS, Alexander, A-6371 Fieberbrunn (AT)
(74) Vertreter: Cohausz & Florack
(86) Internationale Anmeldenummer: PCT/EP2008/058830
(87) Internationale Veröffentlichungsnummer: WO 2009/013124

(56) Entgegenhaltungen:
- EP-A- 0 274 789
- DE-A1- 4 237 025
- DE-A1- 10 002 533
- FR-A- 2 760 999
- US-A- 3 490 977
- US-A- 3 650 871
- US-A- 4 816 097
- US-A- 5 256 467
- US-A- 5 701 621
- US-A- 6 153 687
- US-A1- 2006 000 547
- US-A1- 2006 118 238

## Beschreibung

Die Erfindung betrifft ein Verfahren und eine Vorrichtung zur Herstellung einer Leichtbauplatte mit zumindest zwei Decklagen und einer Mittellage.

Bei dem Verfahren wird eine Mittellage aus einem Wabenmaterial aus Kunststoff bereitgestellt, wobei die Mittellage, bevor sie zwischen den beiden Decklagen angeordnet und einer Presseneinheit zugeführt wird, an den Kontaktflächen mit einem Lösemittel versehen wird, welches den Kunststoff der Mittellage vorübergehend zum Erreichen von Klebeeigenschaften weich macht. Dass den Kunststoff weichmachende Mittel ist insoweit also ein Klebemittel. Die Mittellage wird anschließend zwischen den beiden Decklagen angeordnet und einer Presseneinheit zugeführt, in der die Mittellage mit den zumindest zwei Decklagen verbunden wrid. Ein solches Verfahren und eine entsprechende Vorrichtung zur Herstellung einer Leichtbauplatte ist beispielsweise aus der EP 0 274 789 A2 bekannt.

Der Einsatz von Leichtbauplatten (LBPL) im Innenausbau ist aus der Verwendung im Türenbau seit geraumer Zeit bekannt. In letzter Zeit hat die Leichtbauplatte aber auch im Möbelbau verstärkt an Bedeutung gewonnen. Der Grund liegt hier einerseits in den vielfältigen Gestaltungsmöglichkeiten, die sich aufgrund der hohen Bauteildicken erzielen lassen, und zum Anderen am geringen Gewicht, was den Transport und die Montage der daraus hergestellten Möbel wesentlich erleichtert.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element dann erst durch abschließendes Lackieren seine endgültige Oberfläche erhielt.

Heute werden Leichtbauplatten für den Möbelbau in zunehmendem Maß auch industriell gefertigt. Dazu wird eine leichte Mittellage mit Decklagen versehen, zumeist durch Klebung, so dass ein großformatiger, rahmenloser Verbund entsteht.

Je nach geforderter Stabilität der Platte werden unterschiedlich dicke Decklagen, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein.

Als Mittellagen werden Kartonwaben oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Neben dem Möbel- und Innenausbau werden Leichtbauplatten auch in vielen anderen Bereichen der Technik eingesetzt, wie beispielsweise in der Haustechnik oder im Schiffs-, Schienenfahrzeug-, Kraftwagen- und Flugzeugbau.

Da eine Leichtbauplatte aus verschiedenen Lagen besteht, lassen sich die Eigenschaften einer solchen Platte in vielfältiger Weise variieren. Neben der Auswahl der Decklagen und des Verbundes zwischen Deck- und Mittellagen kommt der Art und der gegebenenfalls speziellen Ausführung der Mittellage besondere Bedeutung zu. Neben den mechanischen Eigenschaften, wie Biegefestigkeit, Druckstabilität oder Elastizität kann durch geeignete Auswahl der Mittellage eine Vielzahl weiterer Eigenschaften erreicht werden. Feuchtebeständigkeit, Brandverhalten, Wärmestandfestigkeit, das Verhalten gegenüber Pilzen, Bakterien und Insekten oder einfach nur die Farbe der Mittellage seien an dieser Stelle als Eigenschaften, die sich durch Variation der Mittellage zumindest wesentlich mit beeinflussen lassen, beispielhaft erwähnt.

Um Leichtbauplatten in verschiedenen Ausführungen herstellen zu können, werden nach dem Stand der Technik für die jeweilige Plattenstärke und bedungene Eigenschaft der fertigen Leichtbauplatte mehrere unterschiedliche Mittellagen bevorratet. Diese werden dann je Fertigung von Platten bestimmter Eigenschaften wechselweise der Verarbeitung zugeführt. Neben dem dadurch gegebenen Aufwand an Lagerkapazität und der damit verbundenen Kapitalbindung ist so auch ein erhöhter Rüstaufwand bei Umstellung zwischen verschiedenen Fertigungslosen gegeben.

Es ist daher Aufgabe der vorliegenden Erfindung, ein Verfahren und eine Vorrichtung zur Herstellung von Leichtbauplatten bereitzustellen, womit in einfacher Weise Leichtbauplatten unterschiedlicher Eigenschaften hergestellt werden können.

Die zuvor hergeleitete und aufgezeigte Aufgabe wird gemäß einer ersten Lehre der vorliegenden Erfindung gelöst durch ein Verfahren zur Herstellung einer Leichtbauplatte mit zumindest zwei Decklagen und einer Mittellage, mit den folgenden Schritten:
- eine Mittellage aus einem Papier-, Karton- oder Pappwabenmaterial wird bereitgestellt,
- die Mittellage wird im Zuge ihrer Verarbeitung einer Behandlungseinheit zugeführt,
- das Wabenmaterial der Mittellage wird in der Behandlungseinheit einer Behandlung unterzogen,
- die Mittellage und/oder Decklage wird mit einem Klebemittel versehen,
- die Mittellage wird zwischen den beiden Decklagen angeordnet und einer Presseneinheit zugeführt, und
- die Mittellage wird mit den zumindest zwei Decklagen verbunden,
- wobei der Schritt, in welchem das Wabenmaterial der Mittellage einer Behandlung unterzogen wird, zusätzlich zu und vor dem Schritt, in welchem die Mittelage und/oder Decklage mit einem Klebemittel versehen wird, durchgeführt wird, und
- wobei in dem Schritt, in welchem das Wabenmaterial der Mittellage einer Behandlung unterzogen wird, das Wabenmaterial durch eine Änderung des Feuchtigkeitsgehalts durch Aufbringen einer Wirkstofflösung mit Wasser als Lösemittel mit einer speziellen Eigenschaft ausgestattet wird, die ihrerseits zu unterschiedlichen Eigenschaften der Leichtbauplatte führt, nämlich einer verbesserten Feuchtebeständigkeit, einer erhöhten Brandbeständigkeit, einer erhöhten Wärmestandfestigkeit, einer erhöhten Resistenz gegenüber Pilz-, Bakterien- und Insektenbefall, einem Vermögen, die umgebende Raumluft zu beduften, einem Vermögen, Luftschadstoffe zu binden, oder einem verbesserten Klang.

Es ist damit möglich, Mittellagen erst unmittelbar vor bzw. im Zuge deren Verarbeitung mit speziellen Eigenschaften auszustatten, wodurch nicht eine Mehrzahl von Mittellagen bevorratet werden muss, um daraus Leichtbauplatten unterschiedlicher Eigenschaften herzustellen. Dadurch können Lager- und Kapitalkosten reduziert werden und es kann zudem auch die Produktion effizienter gestaltet werden, da es nicht mehr notwendig ist, das Mittellagenmaterial bei einer Umstellung auf ein neues Fertigungslos zu wechseln, sondern es reicht aus, die Art der Behandlung des Mittellagenmaterials zu variieren.

Die Behandlung der Mittellage, die unabhängig vom Aufbringen des Klebemittels durchgeführt wird, kann aber auch zum Zweck der verbesserten Eigenschaften für einen nachfolgenden Fertigungsschritt erfolgen, wobei hier eine Überlagerung der Effekte der Behandlung, also eine Behandlung die einerseits die Eigenschaften der fertigen Leichtbauplatte und andererseits auch die Eigenschaften, welche sich in einem nachfolgenden Fertigungsschritt auswirken, erfolgen kann.

Erfindungsgemäß ist vorgesehen, dass die Behandlung eine Änderung des Feuchtigkeitsgehalts und gegebenenfalls der Temperatur der Mittellage bewirkt. Besonders geeignet ist bei entsprechender Saugfähigkeit des Mittellagenmaterials eine Behandlung mit einer Flüssigkeit, die im Tauchverfahren oder im Sprühverfahren erfolgt. Sowohl beim Tauch- als auch beim Sprühverfahren ist es in einfacher Weise in kurzer Zeit möglich, durch Wechsel der Flüssigkeit die Behandlung so zu ändern, dass unterschiedliche Eigenschaften des Mittellagenmaterials erreicht werden. Besonders vorteilhaft ist es, verschiedene Sprühvorrichtungen oder Tauchbehälter vorzusehen, die dann rasch nacheinander aktiviert werden können. Auch ist eine Kombination aus einem Tauch- und einem Sprühverfahren denkbar, um rasch wechselnde Behandlungen des Mittellagenmaterials umsetzen zu können.

Neben dem Einsatz flüssiger Medien zur Behandlung der Mittellage ist es ebenso möglich, diese mit Hilfe eines Gases, eines Dampfes oder durch Mischungen daraus zu bewerkstelligen. Eine weitere Möglichkeit besteht auch in der Anwendung von Strahlung, wie UV-Strahlung oder Elektronenstrahlung. Die letztgenannten Verfahren sind besonders geeignet, wenn die Mittellage eine Vorbehandlung, etwa bereits beim Hersteller des Mittellagenmaterials, erfahren hat, die dann unmittelbar vor der Verarbeitung aktiviert werden soll. Beispielsweise kann es sich hier um ein mit UV-Strahlung härtbares Polymer das zur Vorbehandlung auf ein Pappwabenmaterial aufgebracht wurde, handeln, das dann nach dem Strecken der Wabe auf ihr Verarbeitungsmaß zur Vernetzung gebracht wird.

Bei den meisten Behandlungen der Mittellage, so insbesondere bei jenen, die den Einsatz flüssiger Medien vorsehen, ist es vorteilhaft, wenn eine entsprechende Porosität bzw. eine entsprechende Saugfähigkeit des Mittellagenmaterials gegeben ist. Diese kann einerseits so sein, dass aufgebrachte Medien ausreichend aufgenommen werden oder anhaften können, andererseits aber soll die Aufnahme des Mediums nicht dazu führen, dass ein behandeltes Mittellagenmaterial dadurch seine Stabilität derart verliert, dass eine nachfolgende Manipulation unmöglich gemacht wird. Die im Bereich der Herstellung von Leichtbauplatten üblicher Weise für den Möbel- und Innenausbau eingesetzten Wabenmaterialien aus einem Papier-, Karton- oder Pappmaterial haben sich für verschiedene Arten der Vorbehandlung als bestens geeignet erwiesen. Durch einfaches Besprühen von Lösungen verschiedener Wirksubstanzen, verschiedener Konzentration und in verschiedener Intensität kann eine Vielzahl unterschiedlicher Behandlungen, die ihrerseits wieder zu unterschiedlichen Eigenschaften der Leichtbauplatten geführt haben, erreicht werden.

Gerade bei der Behandlung mit flüssigen Medien ist es in der Regel sinnvoll, Lösungen von Wirksubstanzen einzusetzen und diese in einem weiteren Behandlungsschritt zu trocknen und damit am Mittellagenmaterial zu fixieren.

Durch Behandlung mit einem flüssigen Medium, etwa durch Sprühen einer Wirkstofflösung auf ein Wabenmaterial, können sehr einfach vielfältige Eigenschaften erhalten werden. Erfolgt eine solche Behandlung der Mittellage etwa mit einem Hydrophobierungmittel, kann eine Leichtbauplatte mit verbesserter Feuchtebeständigkeit erhalten werden. Dies ist vor allem bei solchen Platten wesentlich, die etwa für Badezimmermöbel oder auch in Küchen eingesetzt werden sollen. Flammschutzmittel können durch Aufsprühen auf das Mittellagenmaterial ebenso sehr wirkungsvoll eingesetzt werden, um eine Mittellage zu erhalten, die bei einer Leichtbauplatte mit erhöhter Brandbeständigkeit, eingesetzt werden kann. Beispielsweise bieten sich hier intumeszierende Substanzen an, die dann bei erhöhter Temperatur im Inneren der Leichtbauplatte eine wärmedämmende Schaumschicht bilden. Auch Herbizide, Fungizide und Bakterizide sind als Lösung für eine Behandlung der Mittellage durch besprühen geeignet, womit Platten erhöhter Resistenz gegen Insekten-, Bakterien- und Pilzbefall erhalten werden können.

Ebenso durch eine Sprühbehandlung in einfacher Weise erreichbar ist die Behandlung mit Duftstoffen oder Stoffen mit einem Vermögen, Luftschadstoffe zu binden. Bei entsprechender Konstruktion der Leichtbauplatte und des daraus hergestellten Möbels ist es damit möglich, die umgebende Raumluft zu beduften und/oder darin enthaltene Luftschadstoffe zu binden. Eine wesentliche weitere Eigenschaft einer Leichtbauplatte ist deren Wärmestandfestigkeit. Vor allem bei der Veredelung der Oberflächen durch Aufbringen eines Furniers oder eines Schichtstoffes in einer Heißpresse kommt es oft zu Temperaturen im Platteninneren von über 60°C. Bei einer längeren Presszeit kann eine Leichtbauplatte mehrere Minuten dieser erhöhten Temperatur ausgesetzt werden.

Durch eine Behandlung der Mittellage mit einer Schicht, die den Wärmetransport im Mittellagenmaterial erschwert und gleichzeitig den bei höherer Temperatur entstehenden Wasserdampf abschirmen kann, gelingt es, die Wärmestandfestigkeit einer solcherart hergestellten Leichtbauplatte nachhaltig zu verbessern. Untersuchungen haben gezeigt, dass bestimmte filmbildende Lacke sehr günstige Eigenschaften aufweisen, zumal sie durch ihre versiegelnde Wirkung einerseits die Auswirkung von Temperaturschwankungen sehr verzögern und andererseits das Eindringen von Feuchtigkeit wirksam reduzieren können. Als Behandlungsart wurde in Versuchen ein Mittellagenmaterial aus Karton durch kurzzeitiges Tauchen mit einem Lack behandelt. Nach Abtrocknung des Lackes war die aus der so erhaltenen Wabe hergestellte Leichtbauplatte für die Verarbeitung in einer Heißpresse wesentlich verbessert geeignet.

In einer weiteren Ausführungsform kann die Mittellage einer Leichtbauplatte nach dem erfindungsgemäßen Verfahren mit einer Einfärbung versehen werden. Dies ist insbesondere vorteilhaft, als die Einfärbung dazu genutzt werden kann, dem Verarbeiter der Platte einen Hinweis auf eine bestimmte Platteneigenschaft zu geben. So ist es dem Verarbeiter von Platten hinlänglich bekannt, dass Platten, die beispielsweise mit einem roten Farbton versehen sind, verbesserte Eigenschaften hinsichtlich Brandbeständigkeit oder solche mit einem grünen Farbton eine verbesserte Feuchtebeständigkeit aufweisen. Durch Aufwalzen einer Farbe bzw. Einfärbung auf der Mittellage, zumindest an einer Oberfläche, wird im Bereich der Klebefuge zwischen dieser Oberfläche und der jeweiligen Decklage eine farbige Markierung erkennbar werden, die entsprechend dem gewünschten Hinweis in ihrem Farbton frei wählbar ist. Wird die Mittellage durch ein Wabenmaterial gebildet, kann die Farbe aber auch wiederum durch Sprühen aufgetragen werden, wobei dies vorteilhaft erfolgt, nachdem die Mittellage bereits auf einer der Decklagen aufliegt, wobei dann erst im Anschluss an die Behandlung die Mittellage mit der zumindest zweiten Decklage verbunden wird.

Leichtbauplatten klingen zumeist hohl. Da diese Eigenschaft verbreitet mit "billig" oder geringer Qualität gleichgesetzt wird, besteht immer wieder die Forderung, den Klang von Leichtbauplatten zu verbessern. Auch hier bietet das erfindungsgemäße Verfahren eine Möglichkeit. Beispielsweise kann ein Mittellagenmaterial mit einem Harz auf Basis eines Isocyanat beaufschlagt werden, welches dann zeitlich verzögert aufschäumt und so vorhandene Hohlräume ausfüllt, was der fertigen Leichtbauplatte einen kompakteren Klang verleiht. Neben einer bestimmten Harzformulierung, welche ein zeitlich verzögertes Aufschäumen des Harzes bewirkt, kann dieser Vorgang auch durch nachträgliches Beaufschlagen mit erhöhter Temperatur, beispielsweise auch induziert über elektromagnetische Wellen oder Mikrowelle, hervorgerufen werden.

Es soll an diesem Beispiel verdeutlicht sein, dass die Behandlung im Sinne der Erfindung nicht unmittelbar zu einer bestimmten Eigenschaft einer Mittellage und/oder einer daraus hergestellten Leichtbauplatte führen muss. Vielmehr ist erfindungsgemäß auch umfasst, eine Behandlung einer Mittellage durchzuführen, die dann erst in Verbindung mit einem weiteren Schritt eine bestimmte Eigenschaft an dem behandelten Mittellagenmaterial und/oder der daraus hergestellten Leichtbauplatte hervorruft.

Zahlreiche weitere Eigenschaften können nach dem erfindungsgemäßen Verfahren bei einer Leichtbauplatte erzielt werden, ohne dass die Leichtbauplatte mit einer jeweils extra dafür vorgesehenen Mittellage versehen sein muss. Diesbezüglich sei hier beispielhaft noch die Möglichkeit der Behandlung mit einem Primer, der verbesserte Klebebedingungen beim Verbund zwischen Deck- und Mittellagen bewirkt, oder die Behandlung der Mittellage mit einem Antistatikum erwähnt. Letzteres dient beispielsweise dazu, eine elektrostatische Aufladung durch die nach dem Verfahren hergestellte Platte verbessert abzuleiten.

Gemäß einer zweiten Lehre der vorliegenden Erfindung wird die Aufgabe gelöst durch eine Vorrichtung zur Herstellung einer Leichtbauplatte mit zumindest zwei Decklagen und einer Mittellage, enthaltend:
- zumindest eine Einheit für die Zufuhr einer Mittellage aus einem Papier-, Karton- oder Pappwabenmaterial,
- eine Behandlungseinheit, mit der das Wabenmaterial der Mittellage im Zuge ihrer Verarbeitung einer Behandlung unterzogen werden kann,
- eine Beleimstation, in der die Mittellage und/oder Decklage mit einem Klebemittel versehen werden kann, und
- zumindest eine Presseneinheit,
- wobei die Behandlungseinheit zusätzlich zu der Beleimstation vorgesehen ist und
- wobei die Behandlungseinheit eine Einrichtung zur Änderung des Feuchtigkeitsgehalts der Mittellage aufweist, derart, dass bei der Behandlung das Wabenmaterial durch eine Änderung des Feuchtigkeitsgehalts durch Aufbringen einer Wirkstofflösung mit Wasser als Lösemittel mit einer speziellen Eigenschaft ausgestattet werden kann, die ihrerseits zu unterschiedlichen Eigenschaften der Leichtbauplatte führt, nämlich einer verbesserten Feuchtebeständigkeit, einer erhöhten Brandbeständigkeit, einer erhöhten Wärmestandfestigkeit, einer erhöhten Resistenz gegenüber Pilz-, Bakterien- und Insektenbefall, einem Vermögen, die umgebende Raumluft zu beduften, einem Vermögen, Luftschadstoffe zu binden, oder einem verbesserten Klang.

Grundsätzlich umfassen Vorrichtungen aus dem Stand der Technik, wie dies beispielsweise aus der EP 1 792 723 A1 bekannt ist, stets eine Einheit zur Zufuhr einer unteren Deckplatte, eine Einheit zur Zufuhr einer Mittellage und eine Einheit zur Zufuhr der oberen Decklage. Wahlweise kann darüber hinaus eine Einheit zur Zufuhr von Rahmenleisten vorgesehen sein, die dann in einem vorbestimmten Abstand und/oder am Rand der fertigen Platte die sogenannten Riegel oder Rahmenleisten bilden, welche dann einen integralen Bestandteil der fertigen Platte bilden. Weiters schließt sich daran eine Pressvorrichtung an, in der die geschichteten und beleimten Lagen verbunden werden. Es können dafür kontinuierliche und diskontinuierliche Pressen, die wahlweise auch beheizbar ausgeführt sein können, eingesetzt werden.

Je nach Ausführung wird ein Klebemittel zum Verbund der Decklagen mit der Mittellage an den Decklagen und/oder an der Mittellage in unterschiedlicher Weise und an unterschiedlichen Positionen aufgebracht. In der Regel erfolgt der Auftrag durch Walzen oder durch Sprühen.

Ist als Mittellage ein Wabenmaterial vorgesehen, wird dieses aus Gründen des vorteilhaften Transports zumeist als ein Vorprodukt angeliefert. Es besteht aus stehend, gegeneinander versetzt verklebten Streifen und wird erst beim Verarbeiter in die gewünschte Ausdehnung gestreckt. Um die einmal eingestellte Ausdehnung zu erhalten, kann es erforderlich sein, diese durch besondere mechanische Einrichtungen zu fixieren oder es erfolgt eine Stabilisierung des Vorprodukts zum gewünschten Wabenmaterial durch kurzzeitige Erwärmung, beispielsweise in einem sogenannten Trocknungstunnel.

Gemäß einer bevorzugten Ausführungsform der Erfindung ist eine Einrichtung zur Änderung des Feuchtigkeitsgehalts und/oder der Temperatur, vorzugsweise eine Einrichtung zur Behandlung der Mittellage mit einer Flüssigkeit, vorgesehen. Dies kann beispielsweise über eine Sprühvorrichtung, die auf die Applizierung des zur Behandlung vorgesehenen Mediums abgestimmt ist, erfolgen. Vorteilhafter Weise wird es günstig sein, die Sprühvorrichtung an einer Position vorzusehen, an der die Mittellage bereits auf der unteren Decklage aufliegt, wobei die obere Decklage aber noch nicht aufgegeben ist. Verschmutzung der Anlagen und ein damit in Kauf zu nehmender zusätzlicher Reinigungsaufwand kann somit vermieden werden. Gemäß einer weiteren Ausführungsform ist vorgesehen, dass die Einheit zur Behandlung der Mittellage nach einer Streckvorrichtung zum Strecken eines Wabenmaterials und dass nach der Einheit zur Behandlung der Mittellage eine Zusammenführvorrichtung zum Zusammenführen der Mittellage mit zumindest einer der Decklagen angeordnet ist. Auch ist es denkbar, dass die Einheit zur Behandlung der Mittellage nach der Streckvorrichtung und dass nach der Einheit zur Behandlung der Mittellage eine Trocknungsvorrichtung angeordnet ist. Insbesondere bei Verarbeitung von Wabenmaterial auf Basis von Karton, Papier oder Pappe, aber auch bei anderen Verarbeitungsformen, wird es besonders bevorzugt sein, die Einheit zur Behandlung der Mittellage mit einer Flüssigkeit unmittelbar vor dem Trocknungstunnel vorzusehen. Damit wird erreicht, dass eine Wirkstofflösung in höherer Menge aufgebracht werden kann, wobei das Lösemittel, zumeist Wasser, aber rasch abgetrocknet werden kann, womit das in der Regel feuchteempfindliche Wabenmaterial nicht unzulässig erweicht wird. Die Behandlung, insbesondere mit Feuchtigkeit, unmittelbar nach der Streckvorrichtung hat auch den Vorteil, dass das Behandlungsmedium, beispielsweise Wasser, auf die bereits gestreckte Wabenstruktur und damit auf eine größere Fläche trifft. Es werden also nicht nur die Stegkanten behandelt, sondern die gesamte Stegfläche.

Es gibt nun eine Vielzahl von Möglichkeiten, das erfindungsgemäße Verfahren und die erfindungsgemäße Vorrichtung auszugestalten und weiterzubilden. Hierzu wird einerseits verwiesen auf die dem Patentanspruch 1 nachgeordneten Patentansprüche, andererseits auf Ausführungsbeispiele in der beigefügten Zeichnung.

Es zeigen:
Fig. 1 eine Vorrichtung zur Herstellung eine Leichtbauplatte, wobei die Behandlung der Mittellage über eine Tauchwanne erfolgt, und
Fig. 2 eine Vorrichtung zur Herstellung einer Leichtbauplatte, wobei die Behandlung der Mittellage durch eine Sprühvorrichtung erfolgt.

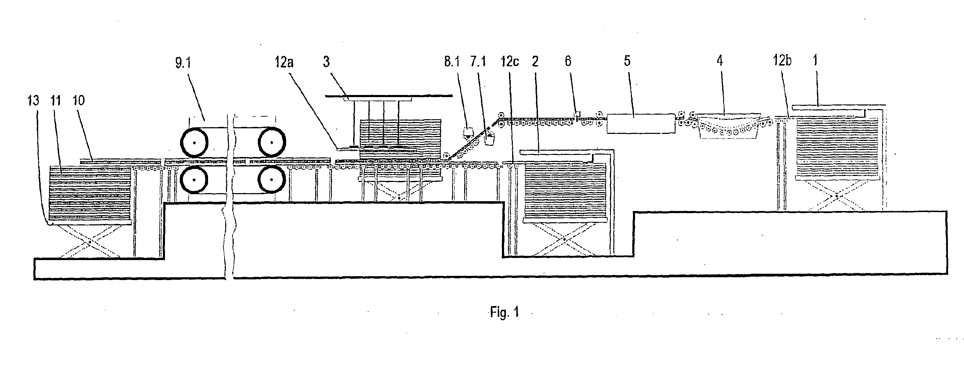

Die in Fig. 1 dargestellte Vorrichtung besteht in Reihenfolge der Produktionsrichtung unter anderem aus Einheiten 1, 2, 3 zur Zufuhr von Deck- und Mittellage 12a, 12b, 12c, aus einer Einheit 4 zur Behandlung der Mittellage 12b in Form einer Tauchwanne und aus einer Presseneinheit 9.1. Das Mittellagenmaterial 12b besteht hier aus einer Fasermatte geringer Dichte. Dieses wird von einem Stapel einer Tauchwanne zugeführt. In der Tauchwanne erfolgt die Behandlung des Mittellagenmaterials 12b mit einem Hydrophobierungsmittel zur Erzielung einer erhöhten Feuchtebeständigkeit der daraus hergestellten Leichtbauplatte 10. An die Tauchwanne schließt sich eine Trocknungsvorrichtung 5 in Form eines Trockentunnels an. Wird ein endloses Mittellagenmaterial 12b eingesetzt, kann dieses an der Ablängstation 6 auf die gewünschte Länge geschnitten werden. Die behandelte Mittellage 12b wird anschließend weiter zur Beleimstation transportiert. Dort wird über entsprechende Auftragswalzen 7.1 und 8.1 die Unter- und Oberseite mit einem Klebemittel versehen. Daran in Produktionsrichtung unmittelbar anschließend wird die Mittellage 12b auf der unteren Decklage 12c abgelegt und darauf dann die obere Decklage 12a. Der so gebildete Aufbau wird dann in die Presseneinheit 9.1, hier als Doppelbandpresse ausgeführt, eingefahren, wo bei Einstellung einer konstanten Dicke das Klebemittel aushärten kann, um den gewünschten Verbund zwischen Deck- und Mittellagen 12a, 12b, 12c zu erhalten. Die fertigen Leichtbauplatten 10 werden dann nach der Presse 9.1 wieder auf einem Hubtisch 13 zu einem Stapel 11 abgelegt.

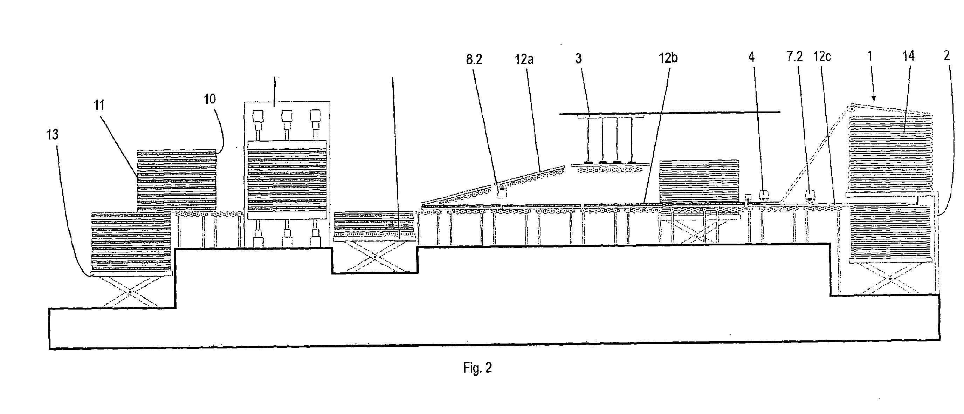

Fig. 2 zeigt eine weitere Ausführungsform der erfindungsgemäßen Vorrichtung. Ebenso besteht diese in Reihenfolge der Produktionsrichtung im Wesentlichen aus Einheiten 1, 2, 3 zur Zufuhr von Deck- und Mittellage 12a, 12b, 12c, aus einer Einheit 4 zur Behandlung der Mittellage 12b in Form einer Sprühvorrichtung und aus einer Presseneinheit 9.2. Die untere Decklage 12c wird hier zunächst über eine Beleimwalze 7.2 an ihrer Oberseite mit einem Klebemittel versehen. Darauf wird das Mittellagenmaterial 12b aufgebracht. Das Mittellagenmaterial 12b besteht hier aus einem Wabenmaterial. Dieses ist aus Pappestreifen, die stehend und gegeneinander versetzt miteinander verklebt sind, hergestellt. Die dicht aneinander liegenden Streifen erhalten ihre flächige und wabenförmige Struktur durch einen Streckvorgang, der im Zuge der Abnahme von dem in Buchten gelegten Strang 14, erfolgt (nicht im Detail dargestellt). Über die Sprüheinrichtung wird auf die Wabe und die untere Deckplatte 12c nun ein Flammschutzmittel aufgebracht. Die an ihrer Unterseite an der Beleimwalze 8.2 mit einem Klebemittel versehene obere Deckplatte 12a wird dann auf der Mittellage 12b abgelegt und der Presseneinheit 9.2, hier als Mehrfachetagenpresse ausgeführt, zugeführt. Ein vor der Presse 9.2 situierter Hubtisch 15 puffert eine Mehrzahl der zusammengestellten Lagen. Ist die gewünschte Anzahl erreicht, wird ein ganzer Stapel 11 gleichzeitig in die Presse 9.2 eingefahren und zu Leichtbauplatten 10 verpresst. Die fertigen Leichtbauplatten 10 können anschließend als Stapel 11 von der Vorrichtung abgenommen werden.

## Patentansprüche

1. Verfahren zur Herstellung einer Leichtbauplatte (10) mit zumindest zwei Decklagen (12a,12c) und einer Mittellage (12b), mit den folgenden Schritten:
- eine Mittellage (12b) aus einem Papier-, Karton- oder Pappwabenmaterial wird bereitgestellt,
- die Mittellage (12b) wird im Zuge ihrer Verarbeitung einer Behandlungseinheit (4;5) zugeführt,
- das Wabenmaterial der Mittellage (12b) wird in der Behandlungseinheit (4;5) einer Behandlung unterzogen,
- die Mittellage (12b) und/oder Decklage (12a,12c) wird mit einem Klebemittel versehen,
- die Mittellage (12b) wird zwischen den beiden Decklagen (12a,12c) angeordnet und einer Presseneinheit (9.1,9.2) zugeführt, und
- die Mittellage (12b) wird mit den zumindest zwei Decklagen (12a,12c) verbunden,
- wobei der Schritt, in welchem das Wabenmaterial der Mittellage (12b) einer Behandlung unterzogen wird, zusätzlich zu und vor dem Schritt, in welchem die Mittelage (12b) und/oder Decklage (12a,12c) mit einem Klebemittel versehen wird, durchgeführt wird, und
- wobei in dem Schritt, in welchem das Wabenmaterial der Mittellage (12b) einer Behandlung unterzogen wird, das Wabenmaterial durch eine Änderung des Feuchtigkeitsgehalts durch Aufbringen einer Wirkstofflösung mit Wasser als Lösemittel mit einer speziellen Eigenschaft ausgestattet wird, die ihrerseits zu unterschiedlichen Eigenschaften der Leichtbauplatte führt, nämlich einer verbesserten Feuchtebeständigkeit, einer erhöhten Brandbeständigkeit, einer erhöhten Wärmestandfestigkeit, einer erhöhten Resistenz gegenüber Pilz-, Bakterien- und Insektenbefall, einem Vermögen, die umgebende Raumluft zu beduften, einem Vermögen, Luftschadstoffe zu binden, oder einem verbesserten Klang.

2. Verfahren nach Anspruch 1, **dadurch gekennzeichnet, dass** durch die Behandlung auch eine Änderung der Temperatur der Mittellage (12b) erfolgt.

3. Verfahren nach Anspruch 1 oder 2, **dadurch gekennzeichnet, dass** die Behandlung der Mittellage (12b) durch ein Tauchverfahren oder ein Sprühverfahren erfolgt.

4. Verfahren nach einem der vorangehenden Ansprüche, **dadurch gekennzeichnet, dass** die Behandlung der Mittellage (12b) in mehreren Schritten erfolgt.

5. Verfahren nach einem der vorangehenden Ansprüche, **dadurch gekennzeichnet,**
- **dass** in einem ersten Schritt der Behandlung die Mittellage (12b) mit der Wirkstofflösung behandelt wird
und
- **dass** in einem weiteren Schritt die Wirkstofflösung an der Mittellage (12b) fixiert wird, insbesondere durch Beaufschlagung mit einer erhöhten Temperatur oder mit einer Strahlung.

6. Verfahren nach einem der vorangehenden Ansprüche, **dadurch gekennzeichnet, dass** die Mittellage (12b) durch die Behandlung eine bestimmte Einfärbung erhält.

7. Verfahren nach einem der vorangehenden Ansprüche, **dadurch gekennzeichnet, dass** die Behandlung der Mittellage (12b) mittels eines Primers erfolgt.

8. Vorrichtung zur Herstellung einer Leichtbauplatte (10) mit zumindest zwei Decklagen (12a,12c) und einer Mittellage (12b), enthaltend:
- zumindest eine Einheit (1) für die Zufuhr einer Mittellage aus einem Papier-, Karton- oder Pappwabenmaterial,
- eine Behandlungseinheit (4;5), mit der das Wabenmaterial der Mittellage (12b) im Zuge ihrer Verarbeitung einer Behandlung unterzogen werden kann,
- eine Beleimstation (7.1,8.1), in der die Mittellage (12b) und/oder Decklage (12a,12c) mit einem Klebemittel versehen werden kann, und
- zumindest eine Presseneinheit (9.1,9.2),
- wobei die Behandlungseinheit (4;5) zusätzlich zu der Beleimstation (7.1,8.1) vorgesehen ist und
- wobei die Behandlungseinheit (4;5) eine Einrichtung zur Änderung des Feuchtigkeitsgehalts der Mittellage (12b) aufweist, derart, dass bei der Behandlung das Wabenmaterial durch eine Änderung des Feuchtigkeitsgehalts durch Aufbringen einer Wirkstofflösung mit Wasser als Lösemittel mit einer speziellen Eigenschaft ausgestattet werden kann, die ihrerseits zu unterschiedlichen Eigenschaften der Leichtbauplatte führt, nämlich einer verbesserten Feuchtebeständigkeit, einer erhöhten Brandbeständigkeit, einer erhöhten Wärmestandfestigkeit, einer erhöhten Resistenz gegenüber Pilz-, Bakterien- und Insektenbefall, einem Vermögen, die umgebende Raumluft zu beduften, einem Vermögen, Luftschadstoffe zu binden, oder einem verbesserten Klang.

9. Vorrichtung nach Anspruch 8, **dadurch gekennzeichnet, dass** die Einheit (4,5) zur Behandlung der Mittellage (12b) eine Einrichtung zur Änderung der Temperatur der Mittellage (12b) und/oder eine Einrichtung zum Auftragen einer Flüssigkeit, insbesondere einer Tauchwanne oder einer Sprüheinrichtung, aufweist.

10. Vorrichtung nach Anspruch 8 oder 9, **dadurch gekennzeichnet, dass** die Einheit (4,5) zur Behandlung der Mittellage (12b) vor der Presseneinheit (9.1,9.2) und vorzugsweise nach der Einheit (1) für die Zufuhr einer Mittellage (12b) angeordnet ist.

11. Vorrichtung nach einem der Ansprüche 8 bis 10, **dadurch gekennzeichnet,**
- **dass** die Einheit (4,5) zur Behandlung der Mittellage (12b) nach einer Streckvorrichtung zum Strecken eines Wabenmaterials und
- **dass** nach der Einheit (4,5) zur Behandlung der Mittellage (12b) eine Zusammenführvorrichtung zum Zusammenführen der Mittellage (12b) mit zumindest einer der Decklagen (12a,12c) angeordnet ist.

12. Vorrichtung nach einem der Ansprüche 8 bis 11, **dadurch gekennzeichnet,**
- **dass** die Einheit (4,5) zur Behandlung der Mittellage (12b) nach der Streckvorrichtung zum Strecken des Wabenmaterials und
- **dass** nach der Einheit (4,5) zur Behandlung der Mittellage (12b) eine Trocknungsvorrichtung (5) angeordnet ist.

## Claims

1. Method for producing a lightweight board (10) having at least two cover layers (12a, 12c) and a central layer (12b) comprising the following steps:
- a central layer (12b) composed of a paper, cardboard or board honeycomb material is provided,
- the central layer (12b) is passed in the course of its processing to a treatment unit (4; 5),
- the honeycomb material of the central layer (12b) undergoes a treatment in the treatment unit (4; 5),
- the central layer (12b) and/or cover layer (12a, 12c) is provided with an adhesive,
- the central layer (12b) is arranged between the two cover layers (12a, 12c) and passed to a press unit (9.1, 9.2), and
- the central layer (12b) is joined to the at least two cover layers (12a, 12c),
- wherein the step in which the honeycomb material of the central layer (12b) undergoes a treatment is carried out additionally to and before the step in which the central layer (12b) and/or cover layer (12a, 12c) is provided with an adhesive, and
- wherein in the step in which the honeycomb material of the central layer (12b) undergoes a treatment, by changing the moisture content by application of an active substance solution with water as solvent, the honeycomb material is provided with a special property which for its part leads to different properties of the lightweight board, namely an improved moisture resistance, an increased fire resistance, an increased heat resistance, an increased resistance to fungal, bacterial and insect infestation, an ability to fragrance the surrounding ambient air, an ability to bind air pollutants or an improved sound.

2. The method according to claim 1, **characterised in that** a change in the temperature of the central layer (12b) also takes place due to the treatment.

3. The method according to claim 1 or 2, **characterised in that** the treatment of the central layer (12b) takes place by a dipping method or a spraying method.

4. The method according to any one of the preceding claims, **characterised in that** the treatment of the central layer (12b) takes place in several steps.

5. The method according to any one of the preceding claims, **characterised in**
- **that** in a first step of the treatment the central layer (12b) is treated with the active substance solution and
- **that** in a further step the active substance solution is fixed on the central layer (12b), in particular by exposure to an elevated temperature or to radiation.

6. The method according to any one of the preceding claims, **characterised in that** the central layer (12b) acquires a specific colouration due to the treatment.

7. The method according to any one of the preceding claims, **characterised in that** the treatment of the central layer (12b) is accomplished by means of a primer.

8. Device for producing a lightweight board (10) having at least two cover layers (12a, 12c) and a central layer (12b) including:
- at least one unit (1) for supplying a central layer composed of a paper, cardboard or board honeycomb material,
- a treatment unit (4; 5) with which the honeycomb material of the central layer (12b) can be subjected to a treatment in the course of its processing,
- a gluing station (7.1, 8.1) in which the central layer (12b) and/or cover layer (12a, 12c) can be provided with an adhesive and
- at least one press unit (9.1, 9.2),
- wherein the treatment unit (4; 5) is provided additionally to the gluing station (7.1, 8.1) and
- wherein the treatment unit (4, 5) comprises a device for changing the moisture content of the central layer (12b) such that during the treatment by changing the moisture content by application of an active substance solution with water as solvent, the honeycomb material can be provided with a special property which for its part leads to different properties of the lightweight board, namely an improved moisture resistance, an increased fire resistance, an increased heat resistance, an increased resistance to fungal, bacterial and insect infestation, an ability to fragrance the surrounding ambient air, an ability to bind air pollutants or an improved sound.

9. The device according to claim 8, **characterised in that** the unit (4, 5) for treatment of the central layer (12b) comprises a device for changing the temperature of the central layer (12b) and/or a device for applying a liquid, in particular a dipping tray or a spraying device.

10. The device according to claim 8 or 9, **characterised in that** the unit (4, 5) for treatment of the central layer (12b) is disposed before the press unit (9.1, 9.2) and preferably after the unit (1) for supplying a central layer (12b).

11. The device according to any one of claims 8 to 10, **characterised in**
- **that** the unit (4, 5) for treatment of the central layer (12b) is disposed after the stretching device for the stretching of a honeycomb material and
- **that** a combining device for combining the central layer (12b) with at least one of the cover layers (12a, 12c) is disposed after the unit (4, 5) for treatment of the central layer (12b).

12. The device according to any one of claims 8 to 11, **characterised in**
- **that** the unit (4, 5) for treatment of the central layer (12b) is disposed after the stretching device for the stretching of the honeycomb material and
- **that** a drying device (5) is disposed after the unit (4, 5) for treatment of the central layer (12b).

## Revendications

1. Procédé de fabrication d'un panneau alvéolaire (10) avec au moins deux couches de recouvrement (12a, 12c) et une couche centrale (12b), comprenant les étapes suivantes :
- on met à disposition une couche centrale (12b) en un matériau en papier, en carton ou en carton alvéolé,
- au cours de son usinage, on amène la couche centrale (12b), vers une unité de traitement (4 ; 5),
- on soumet le matériau alvéolé de la couche centrale (12b) à un traitement dans l'unité de traitement (4 ; 5),
- on munit la couche centrale (12b) et/ou la couche de recouvrement (12a, 12c) d'un adhésif,
- on dispose la couche centrale (12b) entre les deux couches de recouvrement (12a, 12c) et on l'amène vers une unité de presses (9.1, 9.2) et
- on relie la couche centrale (12b) avec les aux moins deux couches de recouvrement (12a, 12c),
- l'étape lors de laquelle le matériau alvéolé de la couche centrale (12b) est soumis à un traitement étant réalisée en supplément de et avant l'étape lors de laquelle la couche centrale (12b) et/ou la couche de recouvrement (12a, 12c) est munie d'un adhésif, et
- lors de l'étape lors de laquelle le matériau alvéolé de la couche centrale (12b) est soumis à un traitement, le matériau alvéolé étant doté d'une propriété spéciale, qui quant à elle confère diverses propriétés au panneau alvéolaire, à savoir une résistance améliorée à l'humidité, une résistance plus élevée au feu, une résistance plus élevée au fluage à chaud, une résistance plus élevée à l'invasion de moisissures, de bactéries et d'insectes, une capacité à parfumer l'air ambiant, une capacité à lier les polluants atmosphériques ou une sonorité améliorée, par une modification de la teneur en humidité par application d'une solution d'agent actif avec de l'eau en tant que solvant.

2. Procédé selon la revendication 1, **caractérisé en ce que** le traitement provoque également une modification de la température de la couche centrale (12b).

3. Procédé selon la revendication 1 ou 2, **caractérisé en ce que** le traitement de la couche centrale (12b) s'effectue par un procédé d'immersion ou un procédé de vaporisation.

4. Procédé selon l'une quelconque des revendications précédentes, **caractérisé en ce que** le traitement de la couche centrale (12b) s'effectue en plusieurs étapes.

5. Procédé selon l'une quelconque des revendications précédentes, **caractérisé en ce que**
- dans une première étape du traitement, on traite la couche centrale (12b) avec la solution d'agent actif et
- dans une étape supplémentaire, on fixe la solution d'agent actif sur la couche centrale (12b) notamment en la soumettant à une température élevée ou à un rayonnement.

6. Procédé selon l'une quelconque des revendications précédentes, **caractérisé en ce que** le traitement confère à la couche centrale (12b) une certaine coloration.

7. Procédé selon l'une quelconque des revendications précédentes, **caractérisé en ce que** le traitement de la couche centrale (12b) s'effectue au moyen d'une couche de fond.

8. Dispositif pour la fabrication d'un panneau alvéolaire (10) avec au moins deux couches de recouvrement (12a, 12c) et une couche centrale (12b), comprenant :
- au moins une unité (1) pour l'amenage d'une couche centrale en un matériau en papier, en carton ou en carton alvéolé,
- une unité de traitement (4 ; 5), à l'aide de laquelle, au cours de son usinage, le matériau alvéolé de la couche centrale (12b) peut être soumis à un traitement,
- un poste d'encollage (7.1, 8.1), dans lequel la couche centrale (12b) et/ou la couche de recouvrement (12a, 12c) peut être munie d'un adhésif et
- au moins une unité de presses (9.1, 9.2),
- l'unité de traitement (4 ; 5) étant prévue en supplément du poste d'encollage (7.1, 8.1) et
- l'unité de traitement (4 ; 5) comportant un appareil pour la modification de la teneur en humidité de la couche centrale (12b) de telle sorte que lors du traitement, par application d'une solution d'agent actif avec de l'eau en tant que solvant, le matériau alvéolé puisse être doté d'une propriété spéciale, qui quant à elle confère diverses propriétés au panneau alvéolaire, à savoir une résistance améliorée à l'humidité, une résistance plus élevée au feu, une résistance plus élevée au fluage à chaud, une résistance plus élevée à l'invasion de moisissures, de bactéries et d'insectes, une capacité à parfumer l'air ambiant, une capacité à lier les polluants atmosphériques ou une sonorité améliorée.

9. Dispositif selon la revendication 8, **caractérisé en ce que** l'unité (4, 5) de traitement de la couche centrale (12b) comporte un appareil pour la modification de la température de la couche centrale (12b) et/ou un appareil pour l'application d'un liquide, notamment une cuve d'immersion ou un appareil de vaporisation.

10. Dispositif selon la revendication 8 ou 9, **caractérisé en ce que** l'unité (4, 5) pour le traitement de la couche centrale (12b) est disposée en amont de l'unité de presse (9.1, 9.2) et de préférence en aval de l'unité (1) pour l'amenage d'une couche centrale (12b).

11. Dispositif selon l'une quelconque des revendications 8 à 10, **caractérisé**
- **en ce que** l'unité (4, 5) pour le traitement de la couche centrale (12b) est disposée en aval d'un dispositif d'étirage pour étirer le matériau alvéolé et
- **en ce qu'**en aval de l'unité (4, 5) pour le traitement de la couche centrale (12b) est disposé un dispositif d'assemblage pour assembler la couche centrale (12b) avec au moins l'une des couches de recouvrement (12a, 12c).

12. Dispositif selon l'une quelconque des revendications 8 à 11, **caractérisé**
- **en ce que** l'unité (4, 5) pour le traitement de la couche centrale (12b) est disposée en aval du dispositif d'étirage pour étirer le matériau alvéolé et
- **en ce qu'**en aval de l'unité (4, 5) pour le traitement de la couche centrale (12b) est disposé un dispositif de séchage (5).
